# EUROPEAN PATENT APPLICATION

(11) **EP 4 815 203 A1**
(43) Date of publication of application: **30.09.2026**
(21) Application number: 24915546.6
(22) Date of filing: 02.12.2024
(51) Int. Cl.: H01Q 5/30, H01Q 13/10, H01Q 21/28, H01Q 1/24, H04M 1/02, H04M 1/23

(54) **ANTENNA AND ELECTRONIC DEVICE COMPRISING SAME**

(30) Priority: 02.01.2024 KR 20240000099; 26.01.2024 KR 20240012174
(71) Applicant: Samsung Electronics Co., Ltd., Suwon-si, Gyeonggi-do 16677 (KR)
(72) Inventor: AN, Chankyu, Suwon-si, Gyeonggi-do 16677 (KR); YUN, Sumin, Suwon-si, Gyeonggi-do 16677 (KR); LEE, Hyungjoo, Suwon-si, Gyeonggi-do 16677 (KR); KANG, Myeongkoo, Suwon-si, Gyeonggi-do 16677 (KR)
(74) Representative: Gulde & Partner
(86) International application number: PCT/KR2024/019459
(87) International publication number: WO 2025/146963

(57) **Abstract**

An electronic device, according to various embodiments, may comprise: a conductive side member; a conductive extension member extending from the conductive side member into an internal space; a non-conductive region disposed between the conductive side member and the conductive extension member; a conductive portion disposed through a segment part extending from the non-conductive region to the side member; a slit extending from the non-conductive region in a direction opposite to the conductive portion by a designated length, the slit corresponding to the segmented part; and a wireless communication circuit electrically connected through a first point of the conductive portion and configured to transmit or receive a wireless signal in a first frequency band.

## Description

### [Technical Field]

Embodiments of the present disclosure relate to an antenna and an electronic device comprising the same.

### [Background Art]

Electronic devices are being gradually slimmed down to satisfy purchase desires of consumers as functional gaps for each manufacturer decrease, and are being developed to increase rigidity of the electronic devices, reinforce design aspects, and simultaneously differentiate functional elements thereof. The electronic devices may include at least one antenna, which should be provided for communication among components (i.e., constituent elements) thereof. The at least one antenna may be implemented through a metal bezel (e.g., side member (i.e., lateral member)) used as a part of a housing of the electronic device, and needs to be improved to enhance radiation performance.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

An electronic device may include at least one housing (e.g., housing structure) including a space for accommodating electronic components (i.e., parts). The housing may include a side member (i.e., lateral member) (e.g., side bezel or bezel) used as at least a part of a side surface of the electronic device. The side member may include a metal material (e.g., conductive member, conductive portion, or conductive material) for reinforcing rigidity of the electronic device and/or performing a specific function (e.g., antenna function). The side member may include a polymer (e.g., non-conductive member, non-conductive portion, or non-conductive material) combined with the metal material. For example, the side member may include at least one conductive portion segmented through at least one segmented part (e.g., non-conductive portion). The at least one conductive portion is electrically connected to a wireless communication circuit of the electronic device, and thereby may be operated as at least one antenna operating in at least one frequency band.

Meanwhile, the at least one conductive portion used as the side member may be operated as an antenna capable of implementing ideal radiation performance through symmetrical disposition (i.e., arrangement) of left and right segmented parts and center feeding of the conductive portion.

However, as the electronic device is gradually being slimmed down, the conductive portion is disposed through an asymmetric segmented structure according to a disposition structure of peripheral electronic components such as a camera or a speaker, and may be configured to have a feeding position biased from the center. In the conductive portion having such a disposition structure, in a specific frequency band (e.g., low band (about 600 MHz to 960 MHz)), current generation in a higher mode such as mode 3 (e.g., j3 mode), mode 4 (e.g., j4 mode), and mode 5 (e.g., j5 mode) relatively surges compared to mode 1 (e.g., j1 mode) and mode 2 (e.g., j2 mode), and thus radiation efficiency of the antenna may be decreased.

Furthermore, another antenna (e.g., slot antenna) may be disposed close to a vicinity of a bezel antenna operating by using the conductive portion. Such another antenna, even if operating in a frequency band different from an operating frequency band of the bezel antenna, may be operated at a multiplied frequency, and may decrease radiation performance of the bezel antenna according to the close disposition.

Various embodiments of the present disclosure may provide an antenna and an electronic device including the same, which may help to improve radiation performance of the antenna even if a segmented part and/or a feeding position are asymmetrically positioned.

Embodiments of the present disclosure may provide an antenna and an electronic device including the same, which may help to improve isolation from another antenna disposed close thereto.

However, the objects to be achieved by the present disclosure are not limited to the above-mentioned objects but may be variously expanded without departing from the technical teachings and scope of the present disclosure.

### [Solution to Problem]

An electronic device, according to various embodiments, may comprise: a conductive side member; a conductive extension member extending from the conductive side member into an internal space; a non-conductive region disposed between the conductive side member and the conductive extension member; a conductive portion disposed through a segmented part extending from the non-conductive region to the side member; a slit extending from the non-conductive region in a direction opposite to the conductive portion by a designated length, the slit corresponding to the segmented part; and a wireless communication circuit electrically connected through a first point of the conductive portion and configured to transmit or receive a wireless signal in a first frequency band.

### [Advantageous Effects of Invention]

An electronic device according to exemplary embodiments of the present disclosure may include a conductive portion disposed through a non-conductive region and a segmented part to operate as an antenna, and the conductive portion may help to improve radiation performance of the antenna according to a reduction in higher mode by inducing current distribution through a slit extending from the non-conductive region by a designated length, and may help to improve isolation between other antennas disposed in a vicinity thereof.

In addition, various effects that can be directly or indirectly identified through the present document may be provided.

The effects obtained by the present disclosure are not limited to the aforementioned effects, and other effects, which are not mentioned above, will be clearly understood by those skilled in the art to which the present disclosure pertains from the following description.

### [Brief Description of Drawings]

In connection with the description of the drawings, the same or similar reference numerals may be used for the same or similar constituent elements.
FIG. 1 is a block diagram of an electronic device in a network environment according to various embodiments of the present disclosure.
FIG. 2A is a front perspective view of an electronic device according to various embodiments of the present disclosure.
FIG. 2B is a rear perspective view of the electronic device of FIG. 1 according to various embodiments of the present disclosure.
FIG. 3 is an exploded perspective view of the electronic device of FIG. 1 according to various embodiments of the present disclosure.
FIG. 4A is a configuration diagram of a side member according to various embodiments of the present disclosure.
FIG. 4B is a partial configuration diagram of the side member of FIG. 4A according to various embodiments of the present disclosure.
FIG. 4C is an enlarged view of a region 4c of FIG. 4A according to various embodiments of the present disclosure.
FIG. 5A is a view illustrating current distribution for each mode according to a length of a slit according to various embodiments of the present disclosure.
FIG. 5B is a graph comparing radiation performance of a first antenna according to a length of a slit according to various embodiments of the present disclosure.
FIG. 6 is a graph comparing isolation between a first antenna and a second antenna according to presence or absence of a slit according to various embodiments of the present disclosure.
FIGS. 7A and 7B are configuration diagrams of side members having different feeding positions according to various embodiments of the present disclosure.
FIG. 7C is a view comparing current distribution for each mode according to presence or absence of a slit in the antennas of FIGS. 7A and 7B according to various embodiments of the present disclosure.
FIG. 7D is a graph comparing radiation performance of the antennas according to presence or absence of a slit in the antennas of FIGS. 7A and 7B according to various embodiments of the present disclosure.

### [Mode for the Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

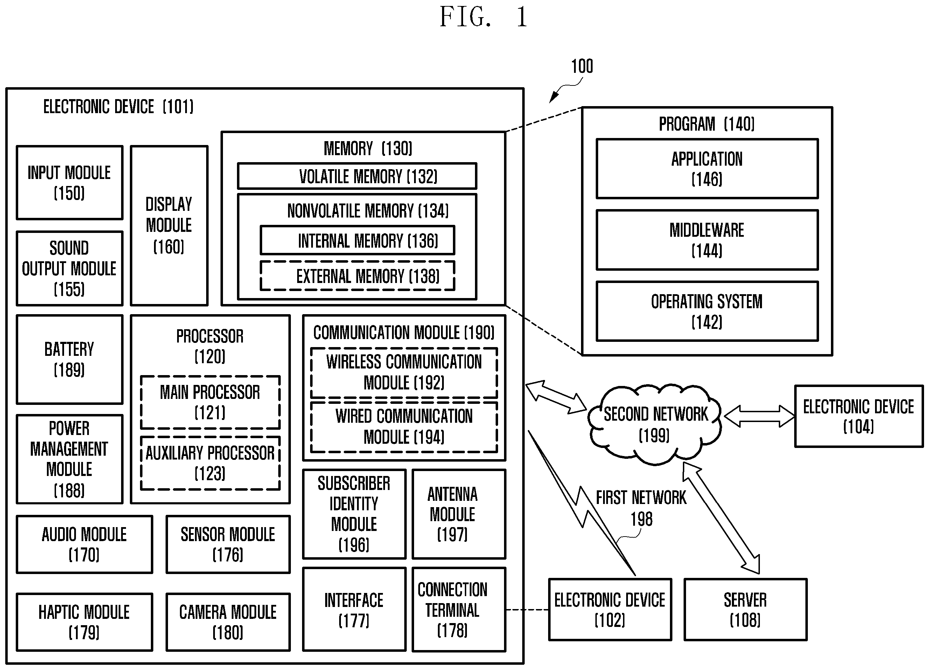

FIG. 1 is a block diagram illustrating an example electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or 450
a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

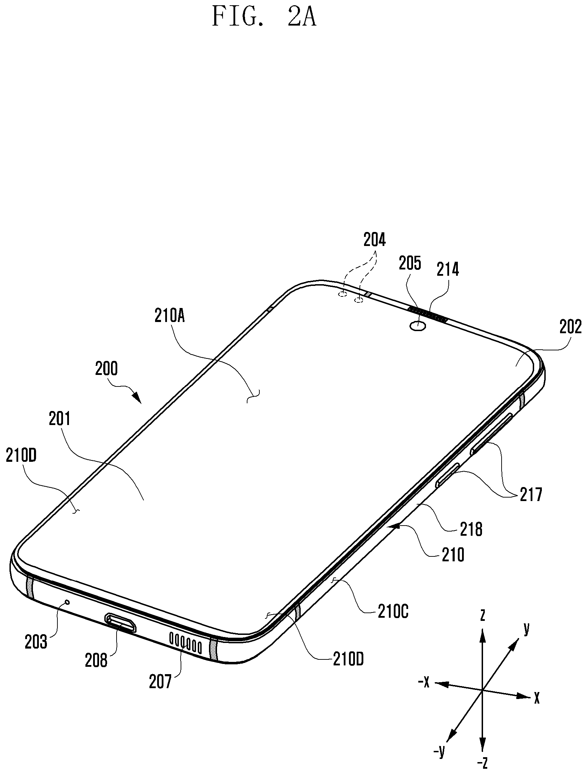

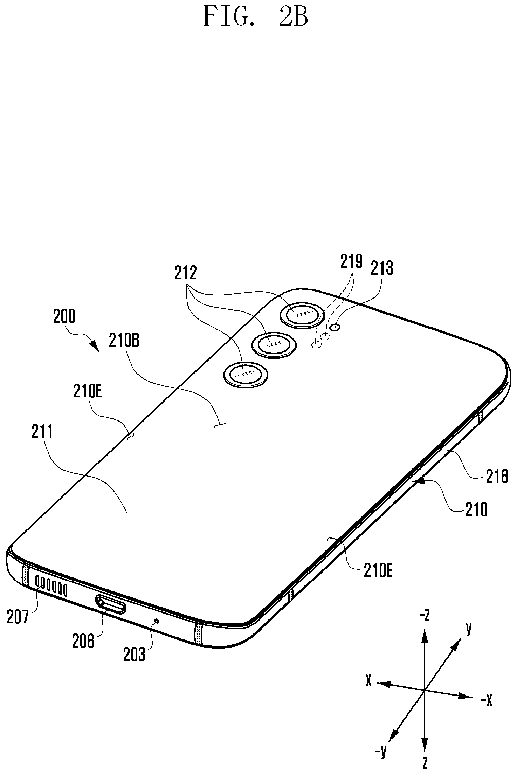

FIG. 2A illustrates a perspective view showing a front surface of a mobile electronic device according to an embodiment of the disclosure.FIG. 2B illustrates a perspective view showing a rear surface of the mobile electronic device shown in FIG. 2A according to an embodiment of the disclosure.

Mobile electronic device 200 in FIGS. 2A and 2B may be at least partially similar to the electronic device 101 in FIG. 1 or may further include other embodiments.

Referring to FIGS. 2A and 2B, a mobile electronic device 200 may include a housing 210 that includes a first surface (or front surface) 210A, a second surface (or rear surface) 210B, and a lateral surface 210C that surrounds a space between the first surface 210A and the second surface 210B. The housing 210 may refer to a structure that forms a part of the first surface 210A, the second surface 210B, and the lateral surface 210C. The first surface 210A may be formed of a front plate 202 (e.g., a glass plate or polymer plate coated with a variety of coating layers) at least a part of which is substantially transparent. The second surface 210B may be formed of a rear plate 211 which is substantially opaque. The rear plate 211 may be formed of, for example, coated or colored glass, ceramic, polymer, metal (e.g., aluminum, stainless steel (STS), or magnesium), or any combination thereof. The lateral surface 210C may be formed of a lateral bezel structure (or "lateral member") 218 which is combined with the front plate 202 and the rear plate 211 and includes a metal and/or polymer. The rear plate 211 and the lateral bezel structure 218 may be integrally formed and may be of the same material (e.g., a metallic material such as aluminum).

The front plate 202 may include two first regions 210D disposed at long edges thereof, respectively, and bent and extended seamlessly from the first surface 210A toward the rear plate 211. Similarly, the rear plate 211 may include two second regions 210E disposed at long edges thereof, respectively, and bent and extended seamlessly from the second surface 210B toward the front plate 202. The front plate 202 (or the rear plate 211) may include only one of the first regions 210D (or of the second regions 210E). The first regions 210D or the second regions 210E may be omitted in part. When viewed from a lateral side of the mobile electronic device 200, the lateral bezel structure 218 may have a first thickness (or width) on a lateral side where the first region 210D or the second region 210E is not included, and may have a second thickness, being less than the first thickness, on another lateral side where the first region 210D or the second region 210E is included.

The mobile electronic device 200 may include at least one of a display 201, audio modules 203, 207, and 214, sensor modules 204 and 219, camera modules 205, 212 and 213, a key input device 217, a light emitting device, and connector holes 208 and 209. The mobile electronic device 200 may omit at least one (e.g., the key input device 217 or the light emitting device) of the above components, or may further include other components.

The display 201 may be exposed through a substantial portion of the front plate 202, for example. At least a part of the display 201 may be exposed through the front plate 202 that forms the first surface 210A and the first region 210D of the lateral surface 210C. The display 201 may be combined with, or adjacent to, a touch sensing circuit, a pressure sensor capable of measuring the touch strength (pressure), and/or a digitizer for detecting a stylus pen. At least a part of the sensor modules 204 and 219 and/or at least a part of the key input device 217 may be disposed in the first region 210D and/or the second region 210E.

According to certain embodiments, the input device 203 may include a microphone. In some embodiments, the input device 203 may include a plurality of microphones positioned to detect the direction of sound. The sound output device 207, 214 may include speakers. The speakers may include an external speaker 207 and a call receiver 214. In some embodiments, the microphone, speakers, and connector 208 may be positioned in the space of the electronic device 200 and may be exposed to the external environment through at least one hole formed in the housing 210. In some embodiments, the hole formed in the housing 210 may be used for both the microphone and the speakers. In some embodiments, the sound output device207, 214 may include a speaker (e.g., a piezo speaker) that operates with the hole formed in the housing 210 excluded. In some embodiments, the electronic device 200 may include a tray member positioned through at least a portion of the side bezel structure 218.

The sensor modules 204 and 219 may generate electrical signals or data corresponding to an internal operating state of the mobile electronic device 200 or to an external environmental condition. The sensor modules 204 and 219 may include a first sensor module 204 (e.g., a proximity sensor) and/or a second sensor module (e.g., a fingerprint sensor) disposed on the first surface 210A of the housing 210, and/or a third sensor module 219 (e.g., a heart rate monitor (HRM) sensor) and/or a fourth sensor module (e.g., a fingerprint sensor) disposed on the second surface 210B of the housing 210. The fingerprint sensor may be disposed on the second surface 210B as well as the first surface 210A (e.g., the display 201) of the housing 210. The mobile electronic device 200 may further include at least one of a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 205, 212 and 213 may include a first camera device 205 disposed on the first surface 210A of the mobile electronic device 200, and a second camera device 212 and/or a flash 213 disposed on the second surface 210B. The camera module 205 or the camera module 212 may include one or more lenses, an image sensor, and/or an image signal processor. The flash 213 may include, for example, a light emitting diode or a xenon lamp. Two or more lenses (infrared cameras, wide angle and telephoto lenses) and image sensors may be disposed on one side of the mobile electronic device 200.

The key input device 217 may be disposed on the lateral surface 210C of the housing 210. The mobile electronic device 200 may not include some or all of the key input device 217 described above, and the key input device 217 which is not included may be implemented in another form such as a soft key on the display 201. The key input device 217 may include the sensor module disposed on the second surface 210B of the housing 210.

The indicator may be disposed on the first surface 210A of the housing 210. For example, the light emitting device may provide status information of the mobile electronic device 200 in an optical form. The light emitting device may provide a light source associated with the operation of the camera module 205. The light emitting device may include, for example, a light emitting diode (LED), an IR LED, or a xenon lamp.

The connector holes 208 may include a first connector hole 208 adapted for a connector (e.g., a USB connector) for transmitting and receiving power and/or data to and from an external electronic device, and/or a second connector hole 209 adapted for a connector (e.g., an earphone jack) for transmitting and receiving an audio signal to and from an external electronic device.

Some camera modules of camera modules 205 and 212, some sensor modules of sensor modules 204 and 219, or an indicator may be arranged to be exposed through the display 201. For example, the camera module 205, the sensor module 204, or the indicator may be arranged in the internal space of an electronic device (e.g., mobile electronic device 200) so as to be brought into contact with an external environment through an opening of the display 201, which is perforated up to the front plate 202. According to an embodiment, an area corresponding to some camera module 105 of the display 201 is a part of an area in which content is displayed, and may be formed as a transmission area having designated transmittance. For example, the transmission area may be formed to have transmittance having a range of about 5% to about 20%. For example, a transmission area of the display 201 may include an area in which the density of pixels and/or a wiring density are lower than that of surroundings.The camera module 205 may include, for example, under display camera (UDC). In another embodiment, some sensor modules 204 may be arranged to perform their functions without being visually exposed through the front plate 202 in the internal space of the electronic device. For example, in this case, an area of the display 201 facing the sensor module may not require a perforated opening.

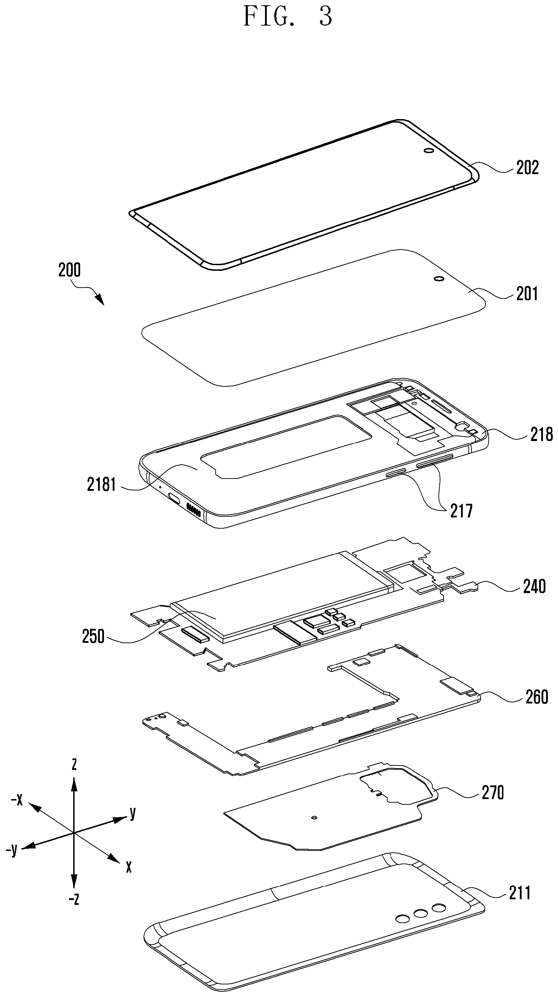

FIG. 3 is an exploded perspective view of the electronic device of FIG. 1 according to various embodiments of the present disclosure.

With reference to FIG. 3, an electronic device 200 may include a side member (i.e., lateral member) 218 (e.g., a side bezel structure 218 of FIGS. 2A and 2B), an extension member 2181 (e.g., a bracket or a support member), a front plate 202 (e.g., a front cover), a display 201, a substrate 240, a battery 250, a support bracket 260 (e.g., a rear case or a support member), an antenna 270, and a rear plate 211 (e.g., a rear cover). In some embodiments, the electronic device 200 may omit at least one of the components (e.g., the extension member 2181, or the support bracket 260) or may additionally include other components. At least one of the components of the electronic device 200 may be the same as, or similar to, at least one of the components of the electronic device 200 of FIG. 2A or 2B, and redundant descriptions will be omitted hereinafter.

According to various embodiments, the extension member 2181 may be disposed inside the electronic device 200 to be structurally coupled with the side member 218, or may be formed integrally with the side member 218. The extension member 2181 may be formed of, for example, a metal material and/or a non-metal material (e.g., polymer). In the extension member 2181, the display 201 may be coupled to one surface and the substrate 240 may be coupled to the other surface. A processor, a memory, and/or an interface may be mounted on the substrate 240. The processor may include, for example, one or more of a central processing unit, an application processor, a graphic processing unit, an image signal processor, a sensor hub processor, or a communication processor. In an embodiment, the display 201 may be disposed to be supported by the extension member 2181.

The memory may include, for example, a volatile memory or a non-volatile memory.

The interface may include, for example, a high definition multimedia interface (HDMI), a universal serial bus (USB) interface, a secure digital (SD) card interface, and/or an audio interface. The interface may electrically or physically connect the electronic device 200 with an external electronic device, for example, and may include a USB connector, an SD card/multi-media card (MMC) connector, or an audio connector.

The battery 250 is a device for supplying power to at least one component of the electronic device 200, and may include, for example, a non-rechargeable primary battery, or a rechargeable secondary battery, or a fuel cell. At least a part of the battery 250 may be disposed, for example, on substantially the same plane as the substrate 340. The battery 250 may be integrally disposed inside the electronic device 200. In another embodiment, the battery 250 may be detachably disposed from the electronic device 200.

The antenna 270 may be disposed between the rear plate 211 and the battery 250. The antenna 270 may include, for example, a near field communication (NFC) antenna, a wireless charging antenna, and/or a magnetic secure transmission (MST) antenna. The antenna 270 may, for example, perform short-range communication with an external device, or may wirelessly transmit or receive power required for charging. In another embodiment, an antenna structure may be formed by a part of the side member 218 and/or the extension member 2181, or a combination thereof.

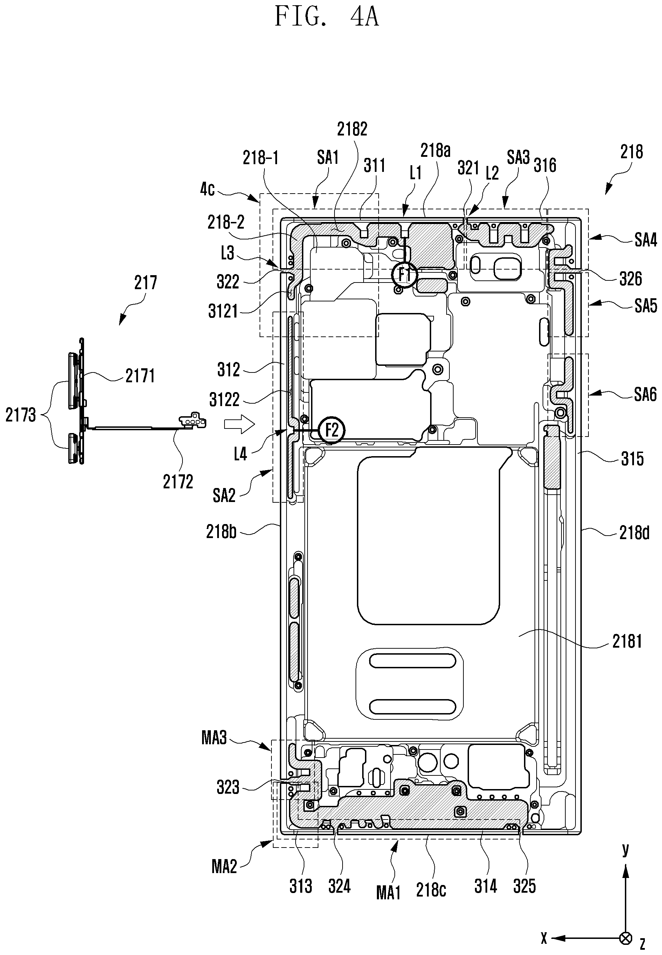

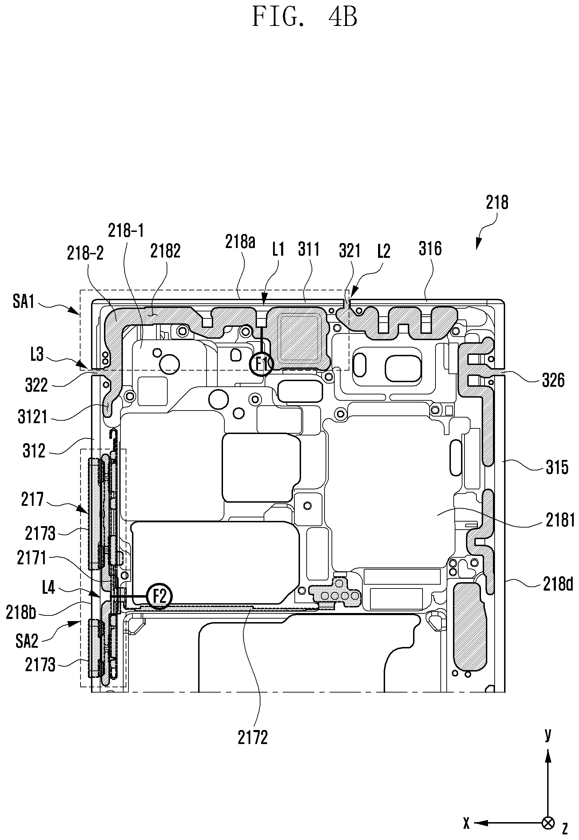

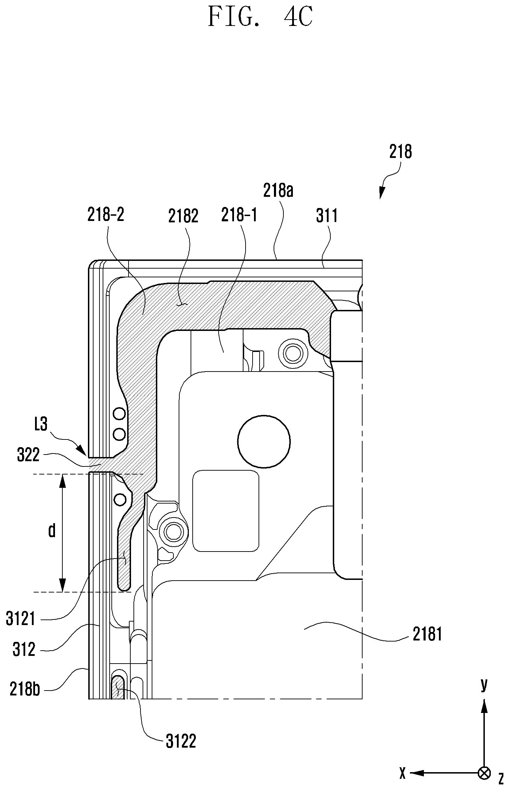

FIG. 4A is a configuration diagram of a side member according to various embodiments of the present disclosure. FIG. 4B is a partial configuration diagram of the side member of FIG. 4A according to various embodiments of the present disclosure. FIG. 4C is an enlarged view of a region 4c of FIG. 4A according to various embodiments of the present disclosure.

With reference to FIGS. 4A to 4C, the side member 218 (e.g., the side member 218 of FIG. 2A) may be formed through a combination of a conductive member 218-1 (e.g., metal) and/or a non-conductive member 218-2 (e.g., polymer). In an embodiment, the side member 218 may include an extension member 2181 at least partially extending from a side surface (e.g., a side surface 210C of FIG. 2A) of an electronic device (e.g., the electronic device 200 of FIG. 2A) into an internal space. In an embodiment, the side member 218 may be configured such that the side surface of the electronic device 200 and at least a part of the extension member 2181 are formed of the conductive member 218-1, and at least a part of the extension member 2181 and segmented parts 321, 322, 323, 324, 325, and 326 (e.g., non-conductive portions or gaps) to be described later are formed of a non-conductive material. In an embodiment, the side member 218 may include a first side surface 218a, having a first length, a second side surface 218b extending from one end of the first side surface 218a to have a second length in a direction perpendicular to the first side surface 218a (e.g., -y axis direction), a third side surface 218c extending from the second side surface 218b to be substantially parallel with the first side surface 218a and have the first length, and a fourth side surface 218d extending from the third side surface 218c to be substantially parallel with the second side surface 218b, have the second length, and extend to the other end of the first side surface 218a.

According to various embodiments, the side member 218 may include conductive portions 311, 312, 313, 314, 315, and 316 disposed to be segmented through spaced segmented parts 321, 322, 323, 324, 325, and 326 (e.g., non-conductive portions or gaps). In an embodiment, the conductive portions 311, 312, 313, 314, 315, and 316 form at least a part of the side surface of the electronic device 200, and may be disposed to be visible from the outside. For example, at least one side surface among the first, second, third, and fourth side surfaces 218a, 218b, 218c, and 218d of the side member 218 may be configured to operate in a designated frequency band (e.g., a legacy band in a range of about 600 MHz to 6000 MHz) by being electrically connected, through the conductive portions 311, 312, 313, 314, 315, and 316, to a wireless communication circuit (e.g., a wireless communication module 192 of FIG. 1) disposed on a substrate (e.g., the substrate 240 of FIG. 3) of the electronic device 200.

According to various embodiments, the conductive portions 311, 312, 313, 314, 315, and 316 may include a first conductive portion 310 disposed between a spaced first segmented part 321 and second segmented part 322, a second conductive portion 312 disposed between a spaced second segmented part 322 and third segmented part 323, a third conductive portion 313 disposed between a spaced third segmented part 323 and fourth segmented part 324, a fourth conductive portion 314 disposed between a spaced fourth segmented part 324 and fifth segmented part 325, a fifth conductive portion 315 disposed between a spaced fifth segmented part 325 and sixth segmented part 326, and/or a sixth conductive portion 316 disposed between a spaced sixth segmented part 326 and the first segmented part 321. In an embodiment, the first conductive portion 311 may be disposed from a part of the first side surface 218a to a part of the second side surface 218b through the first segmented part 321 disposed on the first side surface 218a and the second segmented part 322 disposed on the second side surface 218b. In an embodiment, the second conductive portion 312 may be disposed on a part of the second side surface 218b through the second segmented part 322 and the third segmented part 323 disposed on the second side surface 218b. In an embodiment, the third conductive portion 313 may be disposed from a part of the second side surface 218b to a part of the third side surface 218c through the third segmented part 323 and the fourth segmented part 324 disposed on the third side surface 218c. In an embodiment, the fourth conductive portion 314 may be disposed on a part of the third side surface 218c through the fourth segmented part 324 and the fifth segmented part 325 disposed on the third side surface 218c. In an embodiment, the fifth conductive portion 315 may be disposed to extend from a part of the third side surface 218c to a part of the fourth side surface 218d through the fifth segmented part 325 and the sixth segmented part 326 disposed on the fourth side surface 218d. In an embodiment, the sixth conductive portion 316 may be disposed to extend from a part of the fourth side surface 218d to a part of the first side surface 218a through the sixth segmented part 326 and the first segmented part 321.

According to various embodiments, the electronic device 200 may include a first antenna SA1 operating through the first conductive portion 311, a second antenna SA2 operating through a slot 3122 disposed to be adjacent to the first antenna SA1 near the second conductive portion 312, third and fourth antennas SA3 and SA4 operating through the sixth conductive portion 316, a fifth antenna SA5 operating through a part of the fifth conductive portion 315, and/or a sixth antenna SA6 operating through a slot disposed near the fifth conductive portion 315. In an embodiment, the first to sixth antennas SA1, SA2, SA3, SA4, SA5, and SA6 may be configured as upper antennas disposed on an upper side of an electronic device (e.g., the electronic device 200 of FIG. 2A). In an embodiment, the electronic device 200 may include a seventh antenna MA1 operating through the fourth conductive portion 314 and/or the third conductive portion 313, an eighth antenna MA2 operating through a part of the third conductive portion 313, and/or a ninth antenna MA3 operating through a part of the second conductive portion 312. In an embodiment, the seventh to ninth antennas MA1, MA2, and MA3 may be configured as lower antennas disposed on a lower side of an electronic device (e.g., the electronic device 200 of FIG. 2A). In an embodiment, the antennas SA1, SA2, SA3, SA4, SA5, SA6, MA1, MA2, and MA3 may be operated in at least one frequency band among a low band of about 600 MHz to 960 MHz, a mid band of about 1700 MHz to 2200 MHz, a high band of about 2300 MHz to 2800 MHz, a sub-6 band of about 5 GHz to 6 GHz, an UHB band of about 3.2 GHz to 4.5 GHz, Bluetooth (BT), global positioning system (GPS), or wireless fidelity (WIFI).

According to various embodiments, the first conductive portion 311 may be operated as the first antenna SA1 (e.g., a metal bezel antenna) by being electrically connected, at a first point L1, with a wireless communication circuit F1 (e.g., the wireless communication module 192 of FIG. 1) disposed on a substrate (e.g., the substrate 240 of FIG. 3). In an embodiment, the first conductive portion 311 may be disposed through a first segmented part 321 disposed at a second point L2 of the first side surface 218a, a second segmented part 322 disposed at a third point L3 of the second side surface 218b, and a non-conductive region 2182 disposed between the first and second side surfaces 218a and 218b and the extension member 2181 formed of the conductive member 218-1. In some embodiments, the first segmented part 321 may be omitted. In an embodiment, the first point L1 may be positioned between the second point L2 and the third point L3. In an embodiment, the non-conductive region 2182 may be filled with a non-conductive member 218-2 such as polymer. In an embodiment, the non-conductive member 218-2 may be seamlessly filled from the non-conductive region 2182 to the first segmented part 321 and/or the second segmented part 322. In some embodiments, the non-conductive region 2182 and the segmented parts 321 and 322 may be respectively filled with non-conductive members of different materials. In some embodiments, at least one of the non-conductive region 2182 or the segmented parts 321 and 322 may be in a state where an empty space is maintained without the non-conductive member 218-2.

According to various embodiments, the electronic device 200 may include, in the side member 218, a slit 3121 extending from the non-conductive region 2182 near the second segmented part 322 by a designated length d. In an embodiment, the slit 3121 may be extended to have a length d in a direction opposite to the first conductive portion 311 (e.g., -y axis direction) along a longitudinal direction of the second side surface 218b (e.g., ±y axis direction). In an embodiment, the slit 3121 may be seamlessly extended from the non-conductive region 2182 and filled with the non-conductive member 218-2. For example, the non-conductive region 2182, the second segmented part 322, and the slit 3121 may be formed as a part of the extension member 3181 by being seamlessly extended and filled with the non-conductive member 218-2 (e.g., polymer). In an embodiment, the length d of the slit 3121 may be formed to have a length in a range of, for example, about 0 < d ≤ λ/4, based on a frequency band of the first antenna SA1 operating by using the first conductive portion 311.

According to various embodiments, in the first conductive portion 311, current distribution increases in a higher mode such as mode 3 (j3), mode 4 (j4), and mode 5 (j5) as it is fed at a non-symmetrical position through the asymmetrically disposed segmented parts 321 and 322 in the side member 218, and thus radiation performance of the first antenna SA1 may be decreased.

According to exemplary embodiments of the present disclosure, the first antenna SA1 may be helped to improve radiation performance by being induced to operate through the slit 3121 extending to have a specific length from the non-conductive region 2182 in the direction opposite to the first conductive portion 311 near the second segmented part 322, thereby increasing current distribution in mode 1 (j1) and mode 2 (j2) rather than current distribution in a higher mode such as mode 3 (j3), mode 4 (j4), and mode 5 (j5).

According to various embodiments, the electronic device 200 may include, in the side member 218, a slot 3122 formed to have a length in a direction substantially parallel with the second side surface 218b. In an embodiment, the slot 3122 may be formed through a shape change of a conductive portion of the extension member 2181, and may be filled with the non-conductive member 218-2. In an embodiment, the slot 3122 may be operated as a second antenna SA2 (e.g., a slot antenna) by being electrically connected, at a fourth point L4, to a wireless communication circuit F2 (e.g., the wireless communication module 192 of FIG. 1) disposed on a substrate (e.g., the substrate 240 of FIG. 3) across the slot 3122. In an embodiment, the second antenna SA2 may be operated in a frequency band of about 600 MHz to 2.4 GHz.

According to various embodiments, the electronic device 200 may include a key button device 217 (e.g., a key input device 217 of FIG. 2A) disposed through at least a part of the slot 3122. In an embodiment, the key button device 217 may include a button substrate 2171 accommodated in at least a part of the slot 3122 and a connector cable 2172 extending from the button substrate 2171 into the internal space of the electronic device 200 and electrically connected to a substrate (e.g., the substrate 240 of FIG. 3). In an embodiment, the key button device 217 may include at least one key button 2173 disposed to penetrate to the slot 3122 from the outside of the side member 218.

According to various embodiments, the slot 3122 may be disposed to be close to the first conductive portion 311 used as the first antenna SA1 by disposition of the key button device 217, and by such close disposition, the first antenna SA1 may be subject to interference, and radiation performance may be decreased. For example, when the second antenna SA2 is operated in a band (e.g., low band) similar to an operating frequency band of the first antenna SA1 (e.g., when resonance occurs), radiation performance may be further decreased.

According to an exemplary embodiment of the present disclosure, the first antenna SA1 may be helped to improve radiation performance by reducing interference by the second antenna SA2 and improving isolation, by including the slit 3121 extending by a specific length d from the non-conductive region 2182 in the direction opposite to the first conductive portion 311 near the second segmented part 322.

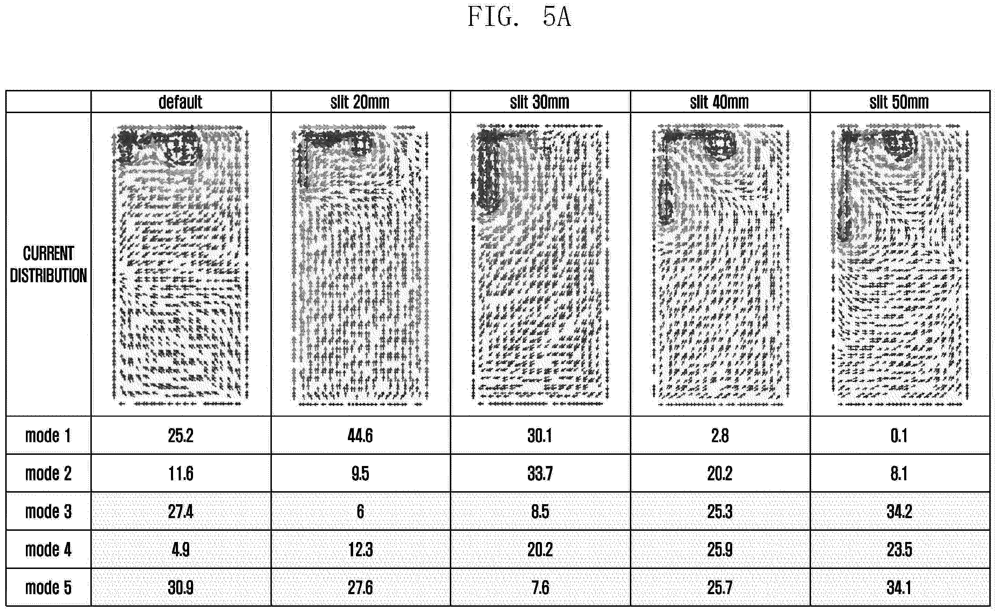

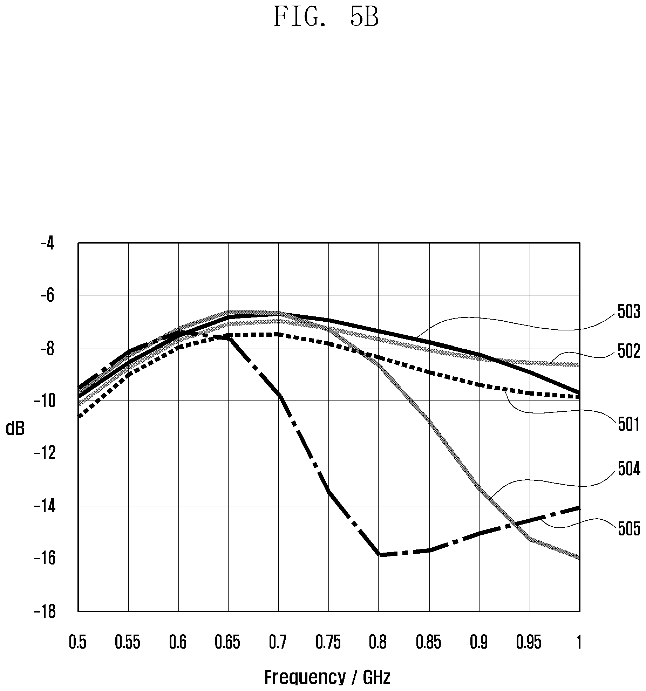

FIG. 5A is a view illustrating current distribution for each mode according to a length of a slit according to various embodiments of the present disclosure. FIG. 5B is a graph comparing radiation performance of a first antenna according to a length of a slit according to various embodiments of the present disclosure.

With reference to FIGS. 5A and 5B, when the first antenna SA1 operating in a frequency band of about 900 MHz range is operated without the slit 3121 (graph 501), current distribution of about 36.8% is manifested in mode 1 and mode 2, and relatively high current distribution of about 63.2% is manifested in a higher mode of mode 3, mode 4, and mode 5, whereas, when it is operated through the slit 3121 having a length d of about 20 mm (graph 502), relatively increased current distribution of about 54.1% is manifested in mode 1 and mode 2, and relatively decreased current distribution of about 45.9% is manifested in a higher mode of mode 3, mode 4, and mode 5, and thus it can be confirmed that radiation performance of the first antenna SA1 is improved. In addition, when the first antenna SA1 is operated through the slit 3121 of 30 mm length d having a length of about λ/4 based on an operating frequency band of about 900 MHz (graph 503), relatively further increased current distribution of about 63.8% is manifested in mode 1 and mode 2, and relatively further decreased current distribution of about 36.3% is manifested in a higher mode of mode 3, mode 4, and mode 5, and thus it can be confirmed that radiation performance of the first antenna SA1 is further improved.

According to various embodiments, also, when the first antenna SA1 is operated through the slit 3121 of about 40 mm, which is longer than 30 mm having a length d of about λ/4 based on an operating frequency band of about 900 MHz (graph 504), current distribution of about 23% is manifested in mode 1 and mode 2, and relatively increased current distribution of about 77% is manifested in a higher mode of mode 3, mode 4, and mode 5, and thus it can be confirmed that radiation performance of the first antenna SA1 is decreased. In addition, when the first antenna SA1 is operated through the slit 3121 of about 50 mm, which is longer than 30 mm (graph 505), current distribution of about 9.2% is manifested in mode 1 and mode 2, and relatively increased current distribution of about 90.8% is manifested in a higher mode of mode 3, mode 4, and mode 5, and thus it can be confirmed that radiation performance of the first antenna SA1 is further decreased.

This may mean that, even if the first antenna SA1 is operated through the slit 3121, when it is operated through the slit 3121 having a length d in a range of about 0 < d ≤ λ/4 based on an operating frequency band, relatively superior radiation performance is manifested than when the slit 3121 does not exist.

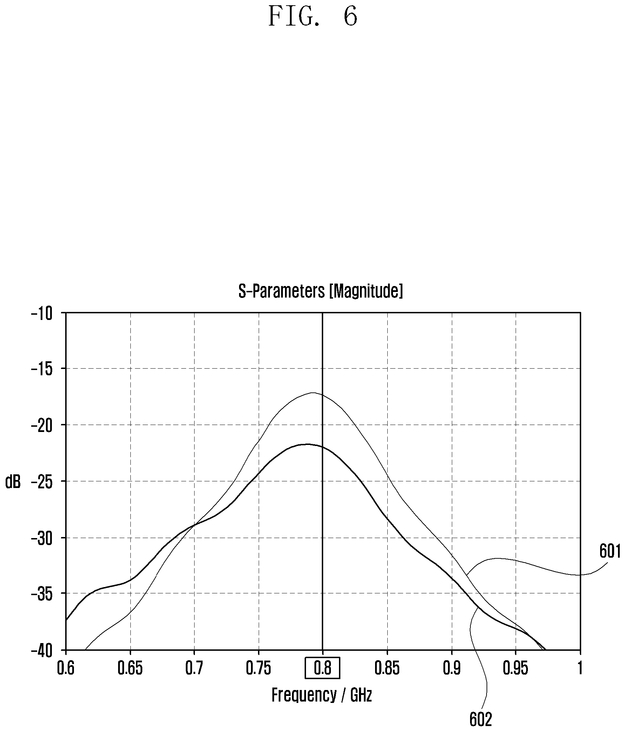

FIG. 6 is a graph comparing isolation between a first antenna and a second antenna according to presence or absence of a slit according to various embodiments of the present disclosure.

In an S21 graph of FIG. 6, when the slit 3121 is not included (graph 601), an amount of signal induced from the second antenna SA2 to the first antenna SA1 is manifested as about -17.38 dB, whereas, when the slit 3121 is included (graph 602), an amount of signal induced from the second antenna SA2 to the first antenna SA1 is about -22.05 dB, and thus it can be confirmed that about 4.67 dB is decreased. This may mean that, when the first antenna SA1 is operated through the slit 3121, isolation from the second antenna SA2 disposed in the vicinity is improved, and radiation performance of the first antenna SA1 is improved.

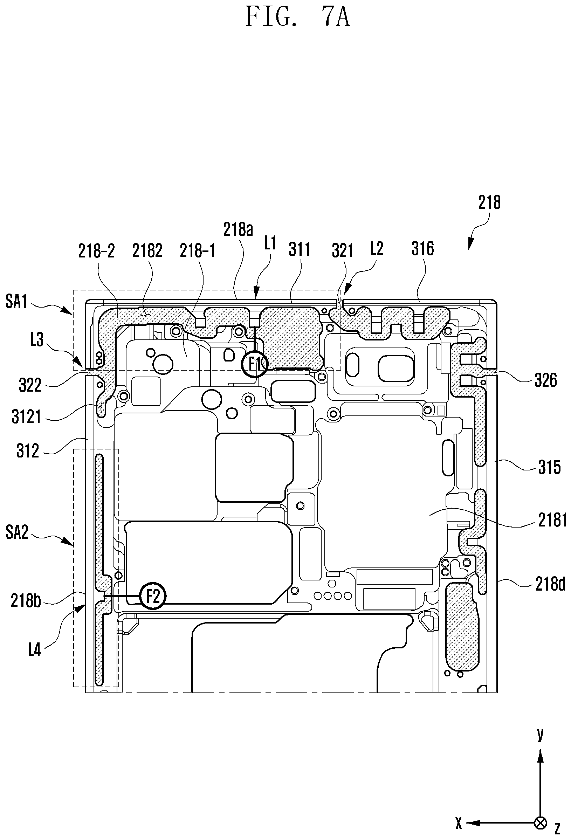

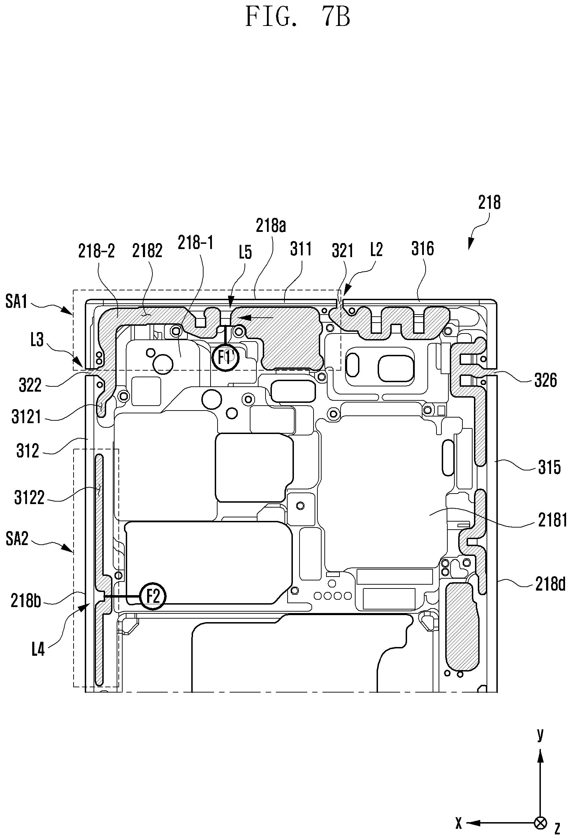

FIGS. 7A and 7B are configuration diagrams of side members having different feeding positions according to various embodiments of the present disclosure.

In describing the side member 218 of FIGS. 7A and 7B, the same reference numerals are assigned to components substantially the same as the side member 218 of FIG. 4A, and detailed descriptions thereof may be omitted.

With reference to FIGS. 7A and 7B, an electronic device (e.g., the electronic device 200 of FIG. 2A) may include a side member 218 including an extension member 2181 extending into an internal space. In an embodiment, the side member 218 may include a first conductive portion 311 extending from a part of the first side surface 218a to a part of the second side surface 218b, and disposed through a first segmented part 321 disposed on the first side surface 218a and a second segmented part 322 disposed on the second side surface 218b. In an embodiment, the first conductive portion 311 may be disposed through a non-conductive region 2182 (or a non-conductive member 218-2 filled in the non-conductive region 2182) disposed between a part of the first side surface 218a and a part of the second side surface 218b and the conductive member 218-1 of the extension member 2181. In an embodiment, the first conductive portion 311 may be operated as a first antenna SA1 in a low band by being electrically connected, at a designated point (e.g., L1 or L5), with a wireless communication circuit F1 (e.g., the wireless communication module 192 of FIG. 1). For example, as shown in FIG. 7A, the first conductive portion 311 may be operated as the first antenna SA1 in a frequency band of about 900 MHz by being electrically connected, at a first point L1, with the wireless communication circuit F1 disposed on a substrate (e.g., the substrate 240 of FIG. 3). In an embodiment, as shown in FIG. 7B, the first conductive portion 311 may be operated as the first antenna SA1 in a frequency band of about 700 MHz by being electrically connected, at a fifth point L5 closer to the second segmented part 322 than the first point L1, with the wireless communication circuit F1 disposed on a substrate (e.g., the substrate 240 of FIG. 3). In an embodiment, the first antenna SA1 may be improved in radiation performance by including the slit 3121 extending by a specific length from the non-conductive region 2182.

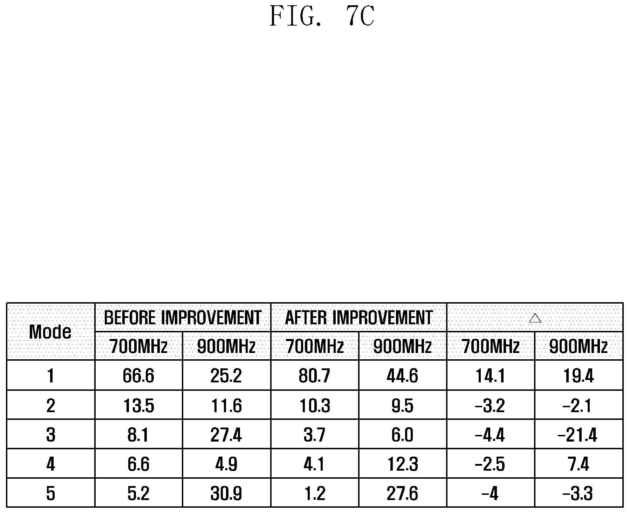

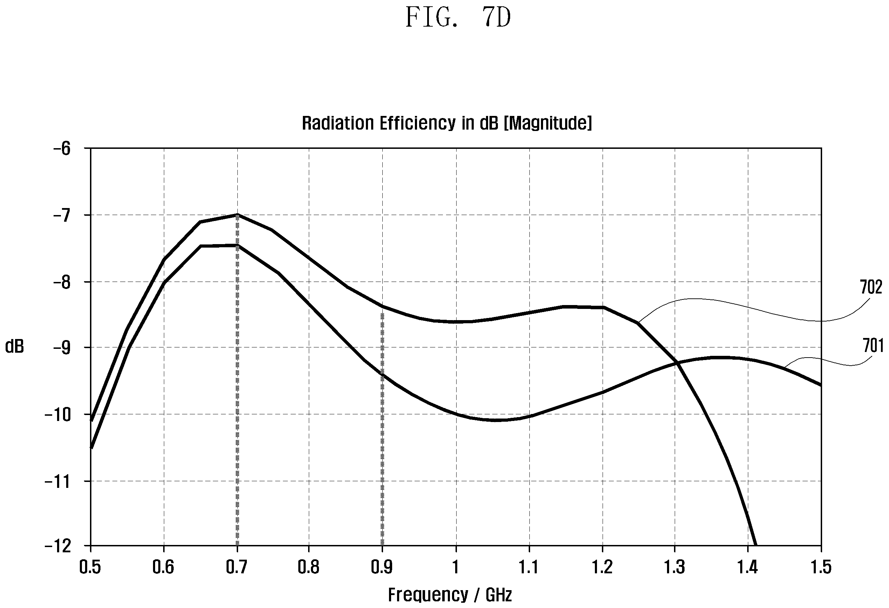

FIG. 7C is a view comparing current distribution for each mode according to presence or absence of a slit in the antennas of FIGS. 7A and 7B according to various embodiments of the present disclosure. FIG. 7D is a graph comparing radiation performance of the antennas according to presence or absence of a slit in the antennas of FIGS. 7A and 7B according to various embodiments of the present disclosure.

With reference to FIGS. 7C and 7D, when the first antenna SA1 operating in frequency bands of about 700 MHz and 900 MHz range is operated without the slit 3121 (graph 701), current distributions of about 80.1% and 36.8% are respectively manifested in mode 1 and mode 2, and current distributions of 19.9% and 63.2% are respectively manifested in a higher mode of mode 3, mode 4, and mode 5, whereas, in case of the first antenna SA1 operating in frequency bands of about 700 MHz and 900 MHz range through the slit 3121 extending from the non-conductive region 2182 by a length of about 20 mm (graph 702), it can be confirmed that relatively high current distributions of about 91% and 54.1% are respectively manifested in mode 1 and mode 2, and relatively low current distributions of 9% and 45.9% are respectively manifested in a higher mode of mode 3, mode 4, and mode 5. This may mean that, even if the first antenna is operated in different frequency bands of the low band, when the slit 3121 is used, superior radiation performance can be manifested than when the slit 3121 is not used.

Although not illustrated, it is obvious that it may be applied to various electronic devices in which a part of a conductive side member (e.g., a conductive side bezel) is used as an antenna, for example, a foldable electronic device and/or a rollable electronic device.

According to various embodiments, an electronic device may include: a conductive side member (e.g., the side member 218 of FIG. 4A); a conductive extension member (e.g., the extension member 2181 of FIG. 4A) extending from the conductive side member into an internal space; a non-conductive region (e.g., the non-conductive region 2182 of FIG. 4A) disposed between the conductive side member and the conductive extension member, and a conductive portion (e.g., the first conductive portion 311 of FIG. 4A) disposed through a segmented part (e.g., the second segmented part 322 of FIG. 4A) extending from the non-conductive region to the side member; a slit (e.g., the slit 3121 of FIG. 4A) extending from the non-conductive region in a direction opposite to the conductive portion by a designated length (e.g., length d of FIG. 4C), the slit corresponding to the segmented part; and a wireless communication circuit (e.g., the wireless communication circuit F1 of FIG. 4A) electrically connected through a first point (e.g., the first point L1 of FIG. 4A) of the conductive portion and configured to transmit or receive a wireless signal in a first frequency band.

According to various embodiments, the length of the slit (e.g., length d of FIG. 4C) may be configured to have a length in a range of 0 < d ≤ λ/4 based on the first frequency band.

According to various embodiments, the conductive portion is formed as at least a part of a side surface (e.g., a first side surface 218a and a second side surface 218b of FIG. 4A) of the electronic device, and may be disposed to be visible from the outside.

According to various embodiments, the segmented part may include a first segmented part (e.g., the first segmented part 321 of FIG. 4A) formed at a second point (e.g., the second point L2 of FIG. 4A) spaced to one side from the first point, and a second segmented part (e.g., the second segmented part 322 of FIG. 4A) formed at a third point (e.g., the third point L3 of FIG. 4A) spaced to the other side from the first point.

According to various embodiments, the slit may extend from the non-conductive region near the second segmented part.

According to various embodiments, the side member includes a first side surface (e.g., the first side surface 218a of FIG. 4A) and a second side surface (e.g., the second side surface 218b of FIG. 4A) extending in a direction perpendicular to the first side surface, and the conductive portion may be disposed through a part of the first side surface and a part of the second side surface.

According to various embodiments, the first segmented part may be positioned on the first side surface, and the second segmented part may be positioned on the second side surface.

According to various embodiments, the first point may be positioned at a point other than a center of the first side surface.

According to various embodiments, the conductive side member and the conductive extension member are formed of metal, and the non-conductive region and the segmented part may be filled with polymer.

According to various embodiments, a slot (e.g., the slot 3122 of FIG. 4A) extending along a longitudinal direction of the side member near the slit is included, and the wireless communication circuit (e.g., the wireless communication circuit F2 of FIG. 4A) is electrically connected through a fourth point (e.g., the fourth point L4 of FIG. 4A) of the slot, and may be configured to transmit or receive a wireless signal in a second frequency band.

According to various embodiments, the wireless communication circuit may be electrically connected to the fourth point across the slot.

According to various embodiments, the first frequency band and the second frequency band may be different from each other.

According to various embodiments, the second frequency band may include a frequency band of 2.4 GHz.

According to various embodiments, a key button device (e.g., the key button device 217 of FIG. 4A) disposed through the slot may be included.

According to various embodiments, the key button device includes a button substrate (e.g., the button substrate 2171 of FIG. 4A), a connector cable (e.g., the connector cable 2172 of FIG. 4A) extending from the button substrate and connected to a substrate of the electronic device, and at least one key button (e.g., the key button 2173 of FIG. 4A) connected to the button substrate, and at least a part of the button substrate may be disposed in a manner of being accommodated in the slot.

According to various embodiments, the at least one key button is connected to the button substrate in a manner of penetrating the side member, and at least a part may be exposed to the outside of the side member.

According to various embodiments, the first frequency band may include a frequency band in a range of 600 MHz to 960 MHz.

According to various embodiments, a front plate (e.g., the front plate 202 of FIG. 2A) coupled with the side member and facing a first direction and a rear plate (e.g., the rear plate 211 of FIG. 2B) coupled with the side member and facing a second direction opposite to the first direction are included, and through the front plate, the rear plate, and the side member, a housing (e.g., the housing 210 of FIG. 2A) including the internal space may be formed.

According to various embodiments, in the internal space, a display (e.g., the display 201 of FIG. 3) disposed to be visible from the outside through the front plate may be included.

According to various embodiments, the display may be disposed to be supported by at least a part of the conductive extension member.

Further, the embodiments of the present disclosure disclosed in the present specification and illustrated in the drawings are provided as particular examples for easily explaining the technical contents according to the embodiment of the present disclosure and helping understand the embodiment of the present disclosure, but not intended to limit the scope of the embodiment of the present disclosure. Accordingly, the scope of the various embodiments of the present disclosure should be interpreted as including all alterations or modifications derived from the technical teachings of the various embodiments of the present disclosure in addition to the disclosed embodiments.

## Claims

1. An electronic device, comprising:
a conductive side member (218);
a conductive extension member (2181) extending from the conductive side member into an internal space;
a non-conductive region (2182) disposed between the conductive side member and the conductive extension member;
a conductive portion (311) disposed through a segmented part (322) extending from the non-conductive region to the side member;
a slit (3121) extending from the non-conductive region in a direction opposite to the conductive portion by a designated length (d), the slit corresponding to the segmented part; and
a wireless communication circuit (F1) electrically connected through a first point (L1) of the conductive portion and configured to transmit or receive a wireless signal in a first frequency band.

2. The electronic device of claim 1, wherein the length (d) of the slit is configured to have a length in a range of 0 < d ≤ λ/4 based on the first frequency band.

3. The electronic device of claim 1, wherein the conductive portion is formed as at least a part of side surfaces (218a, 218b) of the electronic device, and is disposed to be visible from the outside.

4. The electronic device of claim 1, wherein the segmented part comprises:
a first segmented part (321) formed at a second point (L2) spaced to one side from the first point; and
a second segmented part (322) formed at a third point (L3) spaced to the other side from the first point.

5. The electronic device of claim 4, wherein the slit extends from the non-conductive region near the second segmented part.

6. The electronic device of claim 4, wherein the side member comprises a first side surface (218a) and a second side surface (218b) extending in a direction perpendicular to the first side surface, and the conductive portion is disposed through a part of the first side surface and a part of the second side surface.

7. The electronic device of claim 6, wherein the first segmented part is positioned on the first side surface, and the second segmented part is positioned on the second side surface.

8. The electronic device of claim 6, wherein the first point is positioned at a point other than a center of the first side surface.

9. The electronic device of claim 1, wherein the conductive side member and the conductive extension member are formed of metal, and the non-conductive region and the segmented part are filled with polymer.

10. The electronic device of claim 1, comprising:
a slot (3122) extending along a longitudinal direction of the side member near the slit,
wherein the wireless communication circuit (F2) is electrically connected through a fourth point (L4) of the slot, and is configured to transmit or receive a wireless signal in a second frequency band.

11. The electronic device of claim 10, wherein the wireless communication circuit is electrically connected to the fourth point across the slot.

12. The electronic device of claim 10, comprising:
a key button device (217) disposed through the slot.

13. The electronic device of claim 12, wherein the key button device comprises:
a button substrate (2171);
a connector cable (2172) extending from the button substrate and connected to a substrate of the electronic device; and
at least one key button (2173) connected to the button substrate, and
wherein at least a part of the button substrate is disposed in a manner of being accommodated in the slot.

14. The electronic device of claim 1, comprising:
a front plate (202) coupled with the side member and facing a first direction; and
a rear plate (211) coupled with the side member and facing a second direction opposite to the first direction,
wherein a housing (210) comprising the internal space is formed through the front plate, the rear plate, and the side member.

15. The electronic device of claim 14, comprising: a display (201) disposed to be visible from the outside through the front plate in the internal space.
